**Europäisches Patentamt**

**European Patent Office**

**Office européen des brevets**

(19)

(11) **EP 1 130 047 A1**

(12) **EUROPÄISCHE PATENTANMELDUNG**

(43) Veröffentlichungstag:
05.09.2001 Patentblatt 2001/36

(51) Int Cl.⁷: **C08J 7/18**, C09J 133/00,
C09J 7/00

(21) Anmeldenummer: 01102758.8

(22) Anmeldetag: 08.02.2001

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **25.02.2000 DE 10008844**

(71) Anmelder: **Beiersdorf Aktiengesellschaft**
**20245 Hamburg (DE)**

(72) Erfinder:
• **Husemann, Marc, Dr.**
**22605 Hamburg (DE)**
• **Zöllner, Stephan, Dr.**
**22043 Hamburg (DE)**

(54) **Verfahren zur Vernetzung von Polyacrylaten durch Elektronenstrahlen**

(57) Verfahren zur Vernetzung von Polyacrylatmassen, dadurch gekennzeichnet, daß durch selektive Bestrahlung der Haftklebemasse mit Elektronenstrahlen die Härtung des Polymers nur in bestimmten Strukturen geschieht und dadurch strukturierte Haftklebemassen hergestellt werden können.

EP 1 130 047 A1

**Beschreibung**

Die Erfindung betrifft ein Verfahren zur Vernetzung von Polyacrylaten durch Elektronenstrahlen.

Unter Klebstoffen sind Produkte zu verstehen, die gemäß ihrer jeweiligen chemischen Zusammensetzung und dem vorliegenden physikalischen Zustand zum Zeitpunkt des Auftragens auf die zu verbindenden Fügeteile oder während ihrer Erwärmung (z.B. Klebstoffolien) eine Benetzung der Oberfläche ermöglichen und in der Klebfuge die für die Kraftübertragung zwischen den Fügeteilen erforderliche Klebschicht ausbilden.

Für Herstellung eines Klebstoffes sowie für dessen Eigenschaften ist der Grad der Vernetzung, welcher einen Einfluß auf die Viskosität sowie auf die Klebeigenschaften hat, ein wichtiges Kriterium. Als Vernetzung bezeichnet man dabei die Reaktion, bei der viele zunächst noch lösliche, lineare oder verzweigte Makromoleküle miteinander zu dreidimensionalen, unlöslichen und nur noch quellbaren polymeren Netzwerken (vernetzte Polymere, Netzpolymere) verknüpft werden. Vernetzung ist möglich durch Ausbildung von kovalenten und nichtkovalenten (koordinativen, ionischen, physikalischen, salzartigen) Bindungen. Die Vernetzung kann direkt beim Aufbau der Makromoleküle als auch durch Reaktion an vorgebildeten, in der Regel funktionelle Gruppen enthaltenden (Pre-)Polymeren durchgeführt werden.

In der Industrie sind Heißschmelzverfahren (Hotmeltverfahren) mit lösungsmittelfreier Beschichtungstechnik zur Herstellung von Haftklebemassen von anwachsender Bedeutung. Allgemein fördern Umweltauflagen und steigende Kosten diesen Entwicklungsprozeß. Neben SIS-Systemen (Styrol/Isopren/Styrol-Copolymere) werden zunehmend Acrylat-Polymere aus der Schmelze als Polymerschicht auf Trägermaterialien aufgetragen.

Durch die Umstellung auf Hotmelt-Verfahren werden einige der bisher angewandten Vernetzungsmechanismen überflüssig. So können z.B. thermische Vemetzungsverfahren mit Metallchelaten oder multifunktionellen Isocyanaten, die sehr populär bei den Lösungsmittelsystemen sind, nicht mehr angewendet werden. Daher forciert man zur Zeit die Vernetzung von Polyacrylathaftklebemassen durch Bestrahlung mit ultraviolettem Licht (UV) oder mit Elektronenstrahlen (ES), letztere ist die sogenannte Elektronenstrahlhärtung (ESH).

Allgemein ist die UV-Vernetzung ein sehr einfaches Verfahren, das nur eine einfache Beschichtungsanlage mit einigen Hg-Niederdrucklampen benötigt. Die UV-Vernetzung funktioniert sehr gut für Polyacrylatmassen mit kleinen Schichtdicken. Die ESH-Technologie ist apparativ aufwendiger, toleriert aber die Vernetzung größerer Schichtdicken und schnellere Bahngeschwindigkeiten.

Für industrielle Anwendungen, insbesondere im Automobilbau, werden temperaturstabile und scherfeste Acrylathaftklebebänder benötigt. Neben der hohen Scherfestigkeit sollten die Klebebänder aber auch eine hohe Klebkraft sowie eine hohe Anfaßklebrigkeit (Adhäsion, Tack) besitzen. Hohe Scherfestigkeit wird bei Polyacrylathaftkleb-massen durch ein hohes mittleres Molekulargewicht sowie eine hohe Polarität erreicht. Des weiteren muß effizient vernetzt werden, um eine sehr scherfeste Klebemasse herzustellen.

Die sehr scherfesten und polaren Haftklebemassen besitzen aber den Nachteil, daß sie für den Hotmelt-Extrusionsprozeß nicht gut geeignet sind, da hohe Anwendungstemperaturen erforderlich sind und durch die Scherung im Extruder das Molekulargewicht verringert wird. Bedingt durch die hohe Polarität und das hohe Molekulargewicht besitzen diese Klebemassen nur eine geringe Klebkraft und einen relativ niedrigen Tack.

Die Aufgabe der Erfindung besteht darin, ein Verfahren zur Verfügung zu stellen, mit dem ein Polyacrylat, insbesondere eine Acrylathaftklebemasse, mit guter Verarbeitbarkeit der Ausgangs- und Zwischenprodukte, beispielsweise für die Hotmelt-Technologie, und gleichzeitig hoher Endscherfestigkeit bei guter Klebkraft und gutem Tack hergestellt werden kann.

Die dargestellte Erfindung stellt ein Verfahren zur selektiven Herstellung strukturierter Polyacrylate vor und ist für die Lösung der geschilderten Aufgabe hervorragend geeignet.

Durch selektive Bestrahlung der Polyacrylate mit Elektronenstrahlen werden unterschiedlich harte Segmente erzeugt, durch die daraus resultierende Strukturierung der vernetzten Polyacrylate lassen sich deren Eigenschaften in der gewünschten Art beeinflussen.

Die Erfindung besteht daher in einem Verfahren zur Vernetzung von Polyacrylatmassen, bei welchem durch selektive Bestrahlung der Haftklebemasse mit Elektronenstrahlen die Härtung des Polymers nur in bestimmten Strukturen geschieht und dadurch strukturierte Haftklebemassen hergestellt werden können.

Als besonders vorteilhaft hat es sich erwiesen, wenn die selektive Bestrahlung erzielt wird, indem die Polyacrylatmasse mit einer Maske abgedeckt wird, die nur an ausgewählten Stellen für die Elektronenstrahlen durchgängig ist.

Eine weitere besonders geeignete Variante der Erfindung besteht darin, die selektive Bestrahlung dadurch zu erzielen, daß die Polyacrylatmasse mit einer Maske abgedeckt wird, die in ihrer Fläche Bereiche unterschiedlicher Dicke aufweist, wobei die Durchlässigkeit der Maske für Elektronenstrahlen abhängig von der Maske der Folie ist.

Hervorragend eignet sich für das Verfahren auch eine Vorgehensweise, bei der die selektive Bestrahlung erzielt wird, indem unterschiedliche Bereiche der Polyacrylatmasse mit Elektronenstrahlen unterschiedlicher Intensität bestrahlt werden, wobei die Intensität der Elektronenstrahlen durch Modulation der Beschleunigungsspannung variiert wird.

Das Verfahren zur Vernetzung von Polyacrylaten läßt sich besonders gut durchführen, wenn als Polyacrylatmasse Polyacrylate bzw. Polyacrylatcopolymere aus den folgenden Monomeren verwendet werden:

a) acrylischen Monomere der allgemeinen Formel

$$CH_2=CH(R^1)(COOR^2)$$

wobei $R^1$ = H oder $CH_3$ und $R^2$ eine Alkylkette mit 2 - 20 C-Atomen ist,
zu 20 - 100 Gewichts-Prozent,
b) acrylische Monomeren der allgemeinen Formel

$$CH_2=CH(R^1)(COOR^3)$$

wobei $R_1$ = H oder $CH_3$ und $R^3$ = H oder $CH_3$ ist,
zu 0 - 35 Gewichts-Prozent,
c) acrylischen Monomere der allgemeinen Formel

$$CH_2=CH(R^1)(CONHR^4)$$

wobei $R^1$ = H oder $CH_3$ und $R^4$ = H oder eine Alkylkette mit 1 - 6 C-Atomen ist,
zu 0 - 20 Gewichts-Prozent,
d) olefinisch ungesättigten Monomere mit funktionellen Gruppen
zu 0 - 25 Gewichts-Prozent.
Eine Weiterentwicklung des Verfahrens zeichnet sich durch die Zugabe von Vernetzern, insbesondere von bi- und/oder multifunktionellen Acrylaten und/oder Methacrylaten, zu der zu vernetzenden Polyacrylatmasse aus.

Gegenstand der Erfindung ist zudem die Verwendung der strukturierten Polyacrylate als Haftklebemasse, insbesondere die Verwendung als Haftklebemasse für ein Klebeband, wobei die Polyacrylatmasse als ein- oder doppelseitiger Film auf einer Trägerfolie vorliegt.
Als Trägermaterial, beispielsweise für Klebebänder, lassen sich hierbei die dem Fachmann geläufigen und üblichen Materialien, wie Folien (Polyester, PET, PE, PP, BOPP, PVC), Vliese, Gewebe und Gewebefolien sowie gegebenenfalls Trennpapier verwenden. Diese Aufzählung soll nicht abschließend sein.
Für die Verwendung können der Acrylatmasse zusätzliche Füllstoffe, Blähmittel, Hohlkugeln, Vollkugeln und/oder Compoundierungsmittel zugesetzt werden.
Als Füllstoffe sind hier beispielsweise Ruß, $TiO_2$, Voll- oder Hohlglaskugeln oder Keimbildner geeignet.
Das Prinzip der strukturierten Vernetzung und dessen Einfluß auf die Eigenschaften der Haftklebemasse sollen im folgenden erläutert werden.
Ausgegangen wird von einer niedrigviskosen Polyacrylatmasse, die für den Hotmelt-Prozeß günstige Verarbeitungseigenschaften besitzt. Zur Herstellung von Klebebändern wird die Acrylatmasse auf ein Trägermaterial aufgebracht und erst auf diesem durch Bestrahlung mit Elektronenstrahlen vernetzt, so daß die Härtung erst auf dem Träger geschieht und die damit für das Endprodukt gewünschte Viskositätserhöhung den Verarbeitungsprozeß nicht stört.
Die Auftragung auf das Trägermaterial kann dabei sowohl einseitig als auch beidseitig geschehen, so daß sich auch doppelseitige Klebebänder erzeugen lassen. Die Auftragung und Aushärtung der zweiten Haftklebeschicht erfolgt dabei vorteilhaft erst, nachdem die erste Haftklebeschicht bereits in ausgehärteter Form (auf der entgegengesetzten Seite) auf dem Träger vorliegt.
Die physikalischen Eigenschaften des Endproduktes, insbesondere dessen Viskosität, Klebkraft und Anfaßklebrigkeit, können durch den Grad der Vernetzung beeinflußt werden, so daß sich durch geeignete Wahl der Reaktionsbedingungen das Endprodukt optimieren läßt. Durch eine selektive Bestrahlung der Acrylathaftklebemasse, also Bestrahlung nur in ausgewählten Bereichen, bzw. durch die lokale Variation der Bestrahlungsintensität lassen sich hochvernetzte neben nicht oder gering vernetzten Segmenten erzeugen. Die Selektion von Bereichen, die hoher Strahlungsintensität ausgesetzt sind, neben solchen, in die nicht oder wenig intensiv eingestrahlt wird, kann dabei durch Bestrahlung durch eine Maske geschehen, hierfür dienen insbesondere ein Gitter oder eine Lochmaske, die für die Strahlung nur lokal durchgängig ist, oder alternativ eine geprägte Folie, die eine inhomogene Dicke und/oder Dichte und daher Zonen unterschiedlicher Elektronenstrahldurchlässigkeit aufweist. Denkbar ist auch die Erzeugung von Bereichen unterschiedlicher Härte durch ortsabhängige Modulation der Energiedosis, dies kann erzielt werden durch Variation der Beschleunigungsspannung.

Das erläuterte Prinzip wird durch zwei Figuren näher erläutert.

| Figur 1 | Strukturierung einer Polyacrylatmasse durch Bestrahlung mit Elektronenstrahlen bei Verwendung einer Maske |
|---------|------------------------------------------------------------------------------------------------------------|
| Figur 2 | Strukturierung einer Polyacrylatmasse durch Bestrahlung mit Elektronenstrahlen bei Verwendung einer Folie, welche Zonen unterschiedlicher Strahlendurchlässigkeit aufweist |

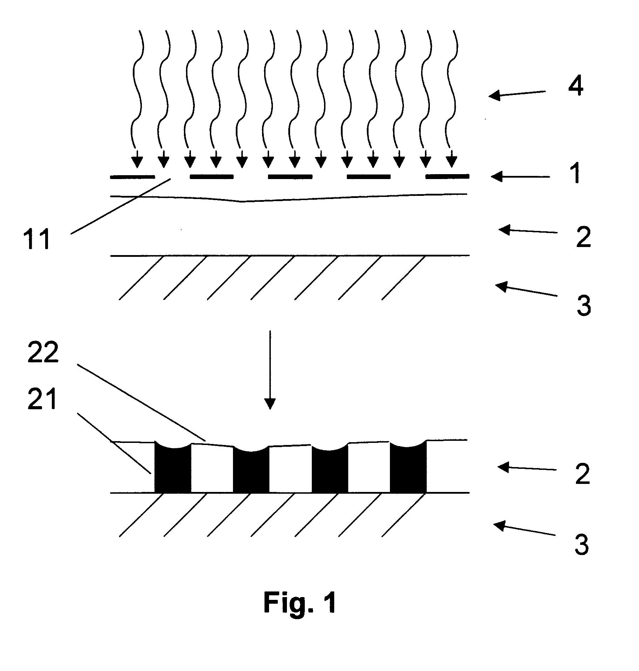

In Figur 1 wird die Bestrahlung der Acrylatmasse (2) durch eine Lochmaske (1) dargestellt, wobei sich die Acrylatmasse (2) auf dem Träger (3) befindet. Die Elektronenstrahlen (4) können die Maske (1) nur im Bereich der Löcher (11) durchdringen, so daß sich nach der Bestrahlung die im unteren Teil der Abbildung dargestellte Situation ergibt: Die Haftklebemasse (2) weist harte Segmente hoher Vernetzung (21) neben unvernetzten Segmenten (22) auf.

Die Polymerketten an den Rändern der harten Bereiche reichen in die weichen Bereiche hinein, die harten und in sich hochviskosen Bereiche sind somit mit den weichen Bereichen verknüpft und behindern diese daher in ihrer Beweglichkeit, so daß die strukturelle Festigkeit der Klebmasse erhöht wird. Diese harten Segmente erhöhen zudem die Kohäsion der Haftklebemasse. Dagegen bewirken die weichen Segmente ein leichteres Auffließen der Klebemasse auf dem Substrat und erhöhen somit die Klebkraft und die Haftklebrigkeit (Tack). Einen großen Einfluß auf die klebtechnischen Eigenschaften hat der prozentuale Anteil der bestrahlten Fläche sowie die Größe der erzeugten Segmente.

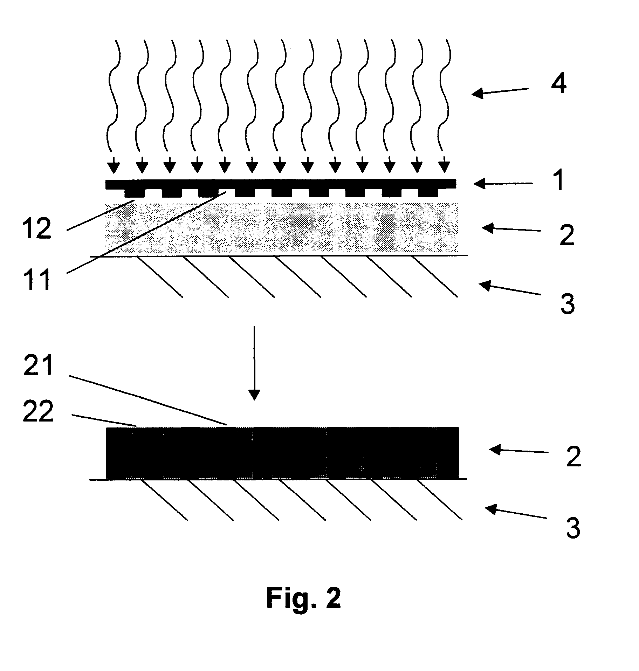

Ein ähnliches Bild ergibt sich in Figur 2, wenn die Bestrahlung mit Elektronenstrahlen (4) durch eine Maske (1) mit lokal unterschiedlicher hoher Strahlungsdurchlässigkeit erfolgt (entsprechende Bereiche 11, 12). Durch die unterschiedlichen Schichtdicken der Maske (1) wird die sich wiederum auf dem Träger (3) befindliche Haftklebemasse (2) durchgehend vernetzt. Durch die dünneren Schichten (11) geht die Elektronenstrahlung (4) weitgehend ungehindert hindurch, und die Klebemasse (2) wird in den derart bestrahlten Segmenten (21) vollständig vernetzt. Die Segmente (22), die aufgrund der größeren Maskendicke (12) einer geringeren Strahlung ausgesetzt sind, werden dagegen nur unvollständig vernetzt. Es entsteht ein Profil aus vollständig vernetzten (21) und teilvernetzten (22) Segmenten.

Die Maske zur Abdeckung kann aus allen Materialien bestehen, welche eine absorbierende Wirkung auf Elektronenstrahlen haben. Die Form der Maske bedingt dabei die Form der ausgehärteten und die der weichen Bereiche.

Als strukturierte Masken können Masken unterschiedlicher Formen und Struktur eingesetzt werden, so z. B. Gitter, Lochmasken, Masken mit Zackenstrukturierung oder runder oder ringförmiger Strukturierung. Entscheidend für die Vernetzung ist vielmehr die Dicke der einzelnen Bereiche der Maske.

Im allgemeinen wird die erforderliche Dosis für die Vernetzung von Haftklebemassen nach der folgenden Formel bestimmt:

$$D = K \cdot i/v \qquad (1)$$

D = absorbierte Dosis in kGy
i = Strahlenausgang in mA
v = Bandgeschwindigkeit
K = Prozeßfaktor

Der Verlust der Energie ist dagegen vom zu durchdringenden Material abhängig und ist folgender Maßen definiert:

$$X = x \cdot \rho \qquad (2)$$

X = normalisierte Tiefe in $g/m^2$
x = Tiefe (um)
$\rho$ = Dichte des Materials $g/cm^3$

Den Prozeßfaktor beeinflussen weitere Parameter, wie die Breite des Elektronenstrahls, die Beschleunigungsspannung und für die Bestrahlung mit strukturierten Folien ebenfalls die Dichte und die Dicke des Folienmaterials [Hermann Neuhaus Steinmetz, Radtech 1993, Chicago, USA; Vortrag über "Penetration Depth of the Radiation Dose and Dose Yield for Low Energy Electron Beam Accelerators"].

Die Maske kann daher aus allen Materialien bestehen, die geeignet sind, energiereiche Strahlung, insbesondere Elektronenstrahlen, nach Gleichung (1) und (2) zu adsorbieren. Als Beispiele und ohne sich dabei unnötig beschränken zu wollen seien hier genannt: Aluminium, Titanium, Eisen und Stahl, Zink, aber auch alle anderen luftbeständigen und in fester Form vorliegenden Metalle; Glas, Elektronenstrahl-beständige Kunststoffe, Keramiken, Porzellane; sowie alle Legierungen, Mischungen und Mehrphasensysteme aus diesen Materialien.

Insgesamt ist die Methode der selektiven Elektronenstrahlvemetzung durch eine Maske oder eine geprägte Folie sehr effizient zur Strukurierung von Polyacrylatmassen. Durch die Strukturierung werden harte und weiche Segmente erzeugt, die im Vergleich zu den homogen und vollständig bestrahlten Bereichen die gleiche Scherfestigkeit aufweisen, aber deutlich klebkräftiger und haftklebriger sind.

Ein weiterer positiver Effekt der strukturierten Vernetzung ist die geringere Trägerschädigung durch die Elektronenstrahlung. Durch die Strukturierung der Haftklebemasse wird ebenfalls die Anzahl der Elektronen verringert, die die Klebemasse und den Träger durchdringen. Einige Trägermaterialien werden durch Elektronen und Elektronendurchschläge stark geschädigt. Die Abrollkräfte für das Klebeband können ansteigen, weiße PVC-Träger verfärben sich beispielsweise dunkel. Die gleichen Phänomene werden auch bei Trennpapieren beobachtet. Durch die Elektronen-Bestrahlung mit einer Lochmaske wird an den unbestrahlten Stellen das Trägermaterial nicht beschädigt. Somit steigen bei dieser Methode die Abrollkräfte für das Acrylathaftklebeband nur relativ wenig an. Ein ähnlicher Effekt wird auch bei der Bestrahlung mit einer strukturierten Maske mit unterschiedlicher Elektronenstrahldurchlässigkeit beobachtet. Hier sinkt unterhalb der teilvernetzten Segmente die Grenzflächendosis des Trägers ab, und das Material wird an diesen Stellen deutlich weniger geschädigt.

**Beispiele**

Die folgenden Versuchsreihen sollen die Erfindung näher erläutern, ohne daß durch die dargestellten Beispiele der Erfindungsgedanke unnötig eingeschränkt werden soll. Die folgenden Testmethoden dienten zur technischen Untersuchung der darauf im folgenden dargestellten beispielhaften Proben.

Testmethoden

Scherfestigkeit (Test A)

Ein 13 mm breiter Streifen des Klebebandes wurde auf eine glatte und gereinigte Stahloberfläche aufgebracht. Die Proben wurden 4 Stunden bei Raumtemperatur und 10 Minuten bei 80 °C konditioniert. Die Auftragsfläche betrug 20 mm × 13 mm (Länge × Breite). Bei 80 °C wurde ein Gewicht von 1 kg an dem Klebeband befestigt und die Zeit bis zum Herunterfallen des Gewichtes gemessen. Diese Messung wurde bei Raumtemperatur wiederholt. Die gemessenen Scherstandzeiten sind in Minuten angegeben und entsprechen dem Mittelwert aus drei Messungen.

180° Klebkrafttest (Test B)

Ein 20 mm breiter Streifen einer auf Polyester als Schicht aufgetragenen Acrylat-Haftklebemasse wurde auf zweimal mit Aceton und einmal mit Isopropanol gereinigten Stahlplatten aufgebracht. Der Haftklebestreifen wurde zweimal mit einem 2-kg-Gewicht auf das Substrat aufgedrückt. Das Klebeband wurde anschließend sofort mit 300 mm/min und im 180°-Winkel vom Substrat abgezogen und die hierzu benötigte Kraft gemessen. Alle Messungen wurden bei Raumtemperatur durchgeführt. Die Meßergebnisse sind in N/cm angegeben und sind gemittelt aus drei Messungen.

Rolling-Ball (Test C)

Ein 25 mm breiter Klebestreifen wird mit der zu prüfenden Klebemasseseite auf eine Meßschiene gelegt. Durch Lösen einer Sperrvorrichtung rollt eine V2A-Meßkugel mit 4 mm Durchmesser eine Rampe hinunter und auf einer waagerechten, mit der Klebemasse beschichteten Fläche entlang. Die durchlaufende Distanz auf der Klebstoffschicht in mm dient als Maß für den Tack.

Herstellung der Proben

Probe 1

Ein für radikalische Polymerisationen konventioneller 2 L-Glasreaktor wurde mit 40 g Acrylsäure, 20 g n-tert.-Butylacrylamid, 340 g 2-Ethylhexylacrylat und 266 g Aceton/Isopropanol (97:3) befüllt. Nachdem die Lösung durch Spülen mit Stickstoffgas von gelösten Gasen (z.B. Sauerstoff) befreit worden war, wurde der Reaktor unter Rühren auf 58 °C geheizt und 0,4 g 2,2'-Azobis(2-methylbutyronitril) hinzugegeben. Anschließend wurde das äußere Heizbad auf 75 °C erwärmt und die Reaktion konstant bei dieser Außentemperatur durchgeführt. Nach 4 und 6 h wurde mit jeweils 150 g Aceton/Isopropanol-Gemisch verdünnt. Nach 36 h Reaktionszeit wurde die Polymerisation abgebrochen und auf Raumtemperatur abgekühlt. Anschließend wurde das Polymer analysiert und aus der Lösung auf eine oberflächenbehandelte PET-Folie mit 50 g/m$^2$ aufgetragen. Alternativ wurde das Lösungsmittel abgedampft und aus der Polyacrylatschmelze beschichtet. Dann wurde von oben mit Elektronenstrahlen einer Dosis von 40 kGy bestrahlt und nach dem Schneiden das Haftklebeband nach den Tests A, B und C klebtechnisch ausgeprüft.

Probe 1B

Die Acrylatklebemasse aus Probe 1 wurde nach der Beschichtung auf Trennpapier mit einer silikonisierten Folie und der Siebmaske B abgedeckt. Anschließend wurde mit Elektronenstrahlen einer Dosis von 40 kGy bestrahlt und das auf diese Weise hergestellte Haftklebeband nach Test A, B und C klebtechnisch ausgeprüft.

Probe 1'

Die Acrylatklebemasse aus Probe 1 wurde nach der Beschichtung auf Trennpapier mit einer silikonisierten Folie und einer strukturierten Alufolie abgedeckt. Anschließend wurde mit Elektronenstrahlen einer Dosis von 40 kGy bestrahlt und das auf diese Weise hergestellte Haftklebeband nach Test A, B und C klebtechnisch ausgeprüft.

Probe 2

Es wurde analog Probe 1 vorgegangen. Zur Polymerisation wurden 16 g Acrylsäure, 192 g n-Butylacrylat und 192 g 2-Ethylhexylacrylat eingesetzt. Die Lösungsmittelmengen wurden beibehalten.

Probe 2B

Die Acrylatklebemasse aus Probe 2 wurde nach der Beschichtung auf Trennpapier mit einer silikonisierten Folie und der Siebmaske B abgedeckt. Anschließend wurde mit Elektronenstrahlen einer Dosis von 40 kGy bestrahlt und das auf diese Weise hergestellte Haftklebeband nach Test A, B und C klebtechnisch ausgeprüft.

Probe 3

Es wurde analog Probe 1 vorgegangen. Zur Polymerisation wurden 24 g Acrylsäure, 316 g 2-Ethylhexylacrylat, 40 g Methylacrylat und 20 g n-tert.-Butylacrylamid eingesetzt.

Probe 3A

Die Acrylatklebemasse aus Probe 3 wurde nach der Beschichtung auf Trennpapier mit einer silikonisierten Folie und der Siebmaske A abgedeckt. Anschließend wurde mit Elektronenstrahlen einer Dosis von 40 kGy bestrahlt und das auf diese Weise hergestellte Haftklebeband nach Test A, B und C klebtechnisch ausgeprüft.

Probe 3B

Die Acrylatklebemasse aus Probe 3 wurde nach der Beschichtung auf Trennpapier mit einer silikonisierten Folie und der Siebmaske B abgedeckt. Anschließend wurde mit Elektronenstrahlen einer Dosis von 40 kGy bestrahlt und das auf diese Weise hergestellte Haftklebeband nach Test A, B und C klebtechnisch ausgeprüft.

Probe 3C

Die Acrylatklebemasse aus Probe 3 wurde nach der Beschichtung auf Trennpapier mit einer silikonisierten Folie und der Siebmaske C abgedeckt. Anschließend wurde mit Elektronenstrahlen einer Dosis von 40 kGy bestrahlt und das auf diese Weise hergestellte Haftklebeband nach Test A, B und C klebtechnisch ausgeprüft.

Probe 3D

Die Acrylatklebemasse aus Probe 3 wurde nach der Beschichtung auf Trennpapier mit einer silikonisierten Folie und der Siebmaske D abgedeckt. Anschließend wurde mit Elektronenstrahlen einer Dosis von 40 kGy bestrahlt und das auf diese Weise hergestellte Haftklebeband nach Test A, B und C klebtechnisch ausgeprüft.

Probe 3'

Die Acrylatklebemasse aus Probe 3 wurde nach der Beschichtung auf Trennpapier mit einer silikonisierten Folie und einer geprägten Alufolie abgedeckt. Anschließend wurde mit Elektronenstrahlen einer Dosis von 40 kGy bestrahlt und das auf diese Weise hergestellte Haftklebeband nach Test A, B und C klebtechnisch ausgeprüft.

Probe 4

Es wurde analog Probe 1 vorgegangen. Zur Polymerisation wurden 8 g Acrylsäure, 72 g n-Butylacrylat, 40 g n-tert.-Butylacrylamid und 280 g 2-Ethylhexylacrylat eingesetzt. Die Lösungsmittelmengen wurden beibehalten.

Probe 4B

Die Acrylatklebemasse aus Probe 4 wurde nach der Beschichtung auf Trennpapier mit einer silikonisierten Folie und der Siebmaske B abgedeckt. Anschließend wurde mit Elektronenstrahlen einer Dosis von 40 kGy bestrahlt und das auf diese Weise hergestellte Haftklebeband nach Test A, B und C klebtechnisch ausgeprüft.

Probe 4'

Die Acrylatklebemasse aus Probe 4 wurde nach der Beschichtung auf Trennpapier mit einer silikonisierten Folie und einer geprägten Alufolie abgedeckt. Anschließend wurde mit Elektronenstrahlen einer Dosis von 40 kGy bestrahlt und das auf diese Weise hergestellte Haftklebeband nach Test A, B und C klebtechnisch ausgeprüft.

Resultate

Die Erzeugung von Hartsegmenten durch selektive Elektronenstrahlvernetzung von Polyacrylathaftklebemassen wurde anhand der Herstellung diverser Acrylafthaftklebemassen durch radikalische Polymerisation kontrolliert. Die Zusammensetzung der untersuchten Proben ist in Tabelle 1 gegeben. Das erreichte Molekulargewicht lag bei den Proben 1 - 4 bei etwa 800.000.

Tabelle 1

| Probe | AS [%] | 2-EHA [%] | MA [%] | n-BuA [%] | NTBAM [%] |
|-------|--------|-----------|--------|-----------|-----------|
| 1 | 10 | 85 | 0 | 0 | 5 |
| 2 | 4 | 48 | 0 | 48 | 0 |
| 3 | 6 | 79 | 10 | 0 | 5 |
| 4 | 2 | 70 | 0 | 18 | 10 |

| | |
|---|---|
| AS | Acrylsäure |
| 2-EHA | 2-Ethylhexylacrylat |
| MA | Methylacrylat |
| n-BuA | n-Butylacrylat |
| NTBAM | n-tert.-Butylacrylamid |

Die Proben 1 - 4 wurden aus der Lösung oder als Hotmelt auf einen PET-Träger mit 50 g/m$^2$ aufgetragen. Nach der Fertigung der Muster wurde mit einem einstufigen Elektronenstrahlbeschleuniger konventionell ganzflächig bestrahlt. Durch die ESH wurden die Polymerketten vernetzt und die Kohäsion der Haftklebemasse gesteigert. Die so erhaltenen Proben verwendete man als Referenz zu den selektiv bestrahlten Mustern. Die klebtechnische Ausprüfung ergab mit einer Dosis von 40 kGy folgende Werte (Tab. 2):

Tabelle 2

| Probe | SSZ 10 N, RT [min] (Test A) | KK (Stahl) [N/cm] (Test B) | Rolling Ball [mm] (Test C) |
|-------|------------------------------|-----------------------------|-----------------------------|
| 1 | >10000 | 4,2 | 125 |

Tabelle 2   (fortgesetzt)

| Probe | SSZ 10 N, RT [min] (Test A) | KK (Stahl) [N/cm] (Test B) | Rolling Ball [mm] (Test C) |
|---|---|---|---|
| 2 | 2430 | 5,2 | 78 |
| 3 | >10000 | 3,9 | 147 |
| 4 | 1345 | 4,8 | 92 |
| SSZ: Scherstandzeiten KK: Klebkraft | | | |

Der Tabelle 2 kann man entnehmen, daß die Klebemassen 1 und 3 mit Scherstandzeiten > 10.000 Minuten relativ scherfest sind. Dagegen sind der Tack und die Klebkraft auf Stahl niedrig. Bei sehr hochscherfesten Massen wird durch die hohe innere Härte nur eine Klebkraft von etwa 4 N/cm erreicht. Die Proben 2 und 4 zeigen dagegen einen besseren Tack bei der Rolling-Ball-Messung und einen höhere Klebkraft auf Stahl. Für diese nur mittel-scherfesten Massen wird eine Klebkraft von etwa 5 N/cm gemessen.

Um nun den Effekt der selektiven Vernetzung zu untersuchen, wurden dieselben Klebemassen mit dünnen Metallgittern abgedeckt und durch diese Masken mit Elektronenstrahlen bestrahlt. Zur Beurteilung des Einflusses des prozentualen Anteils der bestrahlten Fläche sowie der Größe der erzeugten Segmente auf die klebtechnischen Eigenschaften wurden die Klebemassen mit unterschiedlichen Masken bestrahlt (Tab. 3):

Tabelle 3

| Maske | Durchlaß | Maschenweite [μm] |
|---|---|---|
| A | 33 % | 200 |
| B | 34 % | 250 |
| C | 60 % | 200 |
| D | 50 % | 500 |

Die Bestrahlung erfolgte mit einer Beschleunigungsspannung von 230 kV sowie einer Dosis von 40 kGy, wobei die von oben bestrahlte Seite klebtechnisch ausgeprüft wurde. Die Ergebnisse dieser Ausprüfung sind in Tabelle 4 aufgelistet:

Tabelle 4

| Probe | SSZ 10 N, RT [min] (Test A) | KK-Stahl [N/cm] (Test B) | Rolling Ball [mm] (Test C) |
|---|---|---|---|
| 3A | 4830 | 6,2 | 60 |
| 3B | 3890 | 5,7 | 74 |
| 3C | >10000 | 5,0 | 102 |
| 3D | 7565 | 5,7 | 76 |
| 1C | >10000 | 4,9 | 95 |
| 2C | 2050 | 6,4 | 60 |
| 4C | 1085 | 5,9 | 55 |
| SSZ: Scherstandzeiten KK: Klebkraft | | | |

Der Vergleich der Proben 3A - 3D zeigt den Einfluß der Maske und damit der bestrahlten Fläche auf die klebtechnischen Eigenschaften. Je durchlässiger die Maske für Elektronenstrahlen ist, desto mehr harte Segmente werden erzeugt und desto stärker steigt die Kohäsion (Scherfestigkeit) der Polyacrylate. Ein Vergleich mit der ganzflächig bestrahlten Referenzmasse 3 zeigt, daß bei 33 %iger Bestrahlung (3A) die Scherfestigkeit niedriger liegt, aber die Klebkraft auf Stahl und der Tack deutlich ansteigen. Probe 3C verdeutlicht, daß bei 60 % Durchlaß die Scherfestigkeit der Ursprungsmasse erreicht wird, aber dafür die Klebkraft und der Tack auf deutlich höherem Niveau liegen. Die Klebkraft steigt von 3,9 N/cm auf 5,0 N/cm. Somit läßt sich durch die selektive Elektronenbestrahlung eine strukturierte Masse erzeugen, die durch die harten Segmente die Scherfestigkeit beibehält, aber durch die weichen, un-

vernetzten Segmente eine höhere Klebkraft auf Stahl und einen höheren Tack besitzt.

Dagegen bewirkte der Wechsel der Größe der erzeugten Segmente wenig (Vergleich 3B und 3D). Die Scherfestigkeit, die Klebkraft und der Tack sind nahezu auf gleichem Niveau. Die Proben 2C und 4C verdeutlichen die Limitierungen der Elektronenbestrahlung durch eine Maske. Die Scherfestigkeit dieser beiden Haftklebemassen liegt auf nahezu gleichem Niveau mit der Referenzmasse, aber die Klebkraft sowie der Tack werden deutlich gesteigert.

Im folgenden werden die Auswirkungen der Elektronenbestrahlung mit einer strukturierten Folie auf die klebtechnischen Eigenschaften hin untersucht. Zur näheren Charakterisierung wurde die Scherfestigkeit, die Klebkraft und die Anfaßklebrigkeit (Tack) der Haftklebemassen gemessen. Zur Untersuchung wurden die Muster 1, 3 und 4 mit je 50 g/m$^2$ aufgetragener Acrylatmasse durch eine geprägte Al-Folie (50 um Durchmesser - runde Strukturierung) mit 40 kGy und 230 kV Beschleunigungsspannung bestrahlt. Die erzeugten vollvernetzten Segmente hatten einen Durchmesser von 50 µm. Die Ergebnisse der klebtechnischen Auswertung sind in Tabelle 5 dargestellt.

Tabelle 5

| Probe | SSZ 10 N, RT [min] (Test A) | KK-Stahl [N/cm] (Test B) | Rolling Ball [mm] (Test C) |
|---|---|---|---|
| 1' | >10000 | 5,4 | 85 |
| 3' | >10000 | 4,7 | 105 |
| 4' | 1250 | 5,9 | 65 |
| SSZ: Scherstandzeiten KK: Klebkraft | | | |

Wiederum bleibt bei der strukturierten Vernetzung die Scherfestigkeit der Klebemassen erhalten. Die Probe 1' und 3' belegen dies. Vergleicht man nun sowohl die Klebkraft auf Stahl als auch den Tack mit den Werten der nichtstrukturierten Proben, so stellt man fest, daß diese bei konstanter Scherfestigkeit ansteigen. Für die Probe 1' wurde eine Klebkraft von 5,4 N/cm, für die Probe 3' eine Klebkraft von 4,7 N/cm gemessen. Durch die weicheren, teilvernetzten Segmente steigt generell auch der Tack im 'Rolling Ball'-Test. Im Vergleich zu den ganzflächig Elektronenstrahl-gehärteten Mustern verkürzt sich die Wegstrecke der Kugel von 125 auf 85 mm (Probe 1) oder von 147 auf 105 mm (Probe 3). Die Scherfestigkeit bleibt für beide Proben mit Scherstandzeiten >10.000 Minuten unverändert.

**Patentansprüche**

1. Verfahren zur Vernetzung von Polyacrylatmassen, **dadurch gekennzeichnet**, daß durch selektive Bestrahlung der Haftklebemasse mit Elektronenstrahlen die Härtung des Polymers nur in bestimmten Strukturen geschieht und dadurch strukturierte Haftklebemassen hergestellt werden können.

2. Verfahren zur Vernetzung von Polyacrylatmassen nach Anspruch 1, **dadurch gekennzeichnet**, daß die selektive Bestrahlung erzielt wird, indem die Polyacrylatmasse mit einer Maske abgedeckt wird, die nur an ausgewählten Stellen für die Elektronenstrahlen durchgängig ist.

3. Verfahren zur Vernetzung von Polyacrylatmassen nach Anspruch 1, **dadurch gekennzeichnet**, daß die selektive Bestrahlung erzielt wird, indem die Polyacrylatmasse mit einer Maske abgedeckt wird, die in ihrer Fläche Bereiche unterschiedlicher Dicke und/oder Dichte aufweist, wobei die Durchlässigkeit der Maske für Elektronenstrahlen abhängig von der Dicke und/oder Dichte der Maske ist.

4. Verfahren zur Vernetzung von Polyacrylatmassen nach Anspruch 1, **dadurch gekennzeichnet**, daß die selektive Bestrahlung erzielt wird, indem unterschiedliche Bereiche der Polyacrylatmasse mit Elektronenstrahlen unterschiedlicher Intensität bestrahlt werden, wobei die Intensität der Elektronenstrahlen durch Modulation der Beschleunigungsspannung variiert wird.

5. Verfahren zur Vernetzung von Polyacrylatmasse nach einem der oberen Ansprüche, **dadurch gekennzeichnet**, daß als Polyacrylatmasse Polyacrylate bzw. Polyacrylatcopolymere aus den folgenden Monomeren verwendet werden:

   a) acrylischen Monomere der allgemeinen Formel

$$CH_2=CH(R^1)(COOR^2)$$

wobei $R^1$ = H oder $CH_3$ und $R^2$ eine Alkylkette mit 2 - 20 C-Atomen ist,
zu 20 - 100 Gewichts-Prozent,
b) acrylische Monomeren der allgemeinen Formel

$$CH_2=CH(R^1)(COOR^3)$$

wobei $R_1$ = H oder $CH_3$ und $R^3$ = H oder $CH_3$ ist,
zu 0 - 35 Gewichts-Prozent,
c) acrylischen Monomere der allgemeinen Formel

$$CH_2=CH(R^1)(CONHR^4)$$

wobei $R^1$ = H oder $CH_3$ und $R^4$ = H oder eine Alkylkette mit 1 - 6 C-Atomen ist,
zu 0 - 20 Gewichts-Prozent,
d) olefinisch ungesättigten Monomere mit funktionellen Gruppen
zu 0 - 25 Gewichts-Prozent.

6. Verfahren nach einem der oberen Ansprüche, **dadurch gekennzeichnet**, daß
der zu vernetzenden Polyacrylatmasse Vemetzer zugesetzt sind.

7. Verfahren nach einem der oberen Ansprüche, **dadurch gekennzeichnet**, daß
als Vemetzer bi- und/oder multifunktionelle Acrylate und/oder Methacrylate als Vernetzer zugesetzt sind.

8. Verwendung des Polyacrylates nach einem der oberen Ansprüche als Haftklebemasse.

9. Verwendung des Polyacrylates nach einem der oberen Ansprüche als Haftklebemasse für ein Klebeband, wobei
die Polyacrylatmasse als ein- oder doppelseitiger Film auf einem Träger vorliegt.

10. Verwendung nach einem der oberen Ansprüche, **dadurch gekennzeichnet**, daß zusätzliche Füllstoffe, Blähmittel,
Hohlkugeln, Vollkugeln und/oder Compoundierungsmittel eingesetzt werden.

**Fig. 1**

**Fig. 2**

**Europäisches Patentamt**

# EUROPÄISCHER RECHERCHENBERICHT

Nummer der Anmeldung

EP 01 10 2758

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 904 853 A (BASF AG) 31. März 1999 (1999-03-31) * Absatz '0009! * * Absatz '0011! * * Ansprüche 1-5,8,9 * --- | 1-10 | C08J7/18 C09J133/00 C09J7/00 |
| X | US 5 670 260 A (ZAJACZKOWSKI MICHAEL J ET AL) 23. September 1997 (1997-09-23) * Ansprüche 1,8,14,15 * --- | 1-10 | |
| A | US 4 677 014 A (BECHEN HERIBERT) 30. Juni 1987 (1987-06-30) * Ansprüche 1-5 * ----- | 1-10 | |

| | RECHERCHIERTE SACHGEBIETE (Int.Cl.7) |
|---|---|
| | C08J C09J |

Der vorliegende Recherchenbericht wurde für alle Patentansprüche erstellt

| Recherchenort | Abschlußdatum der Recherche | Prüfer |
|---|---|---|
| MÜNCHEN | 29. Mai 2001 | Natus, G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**               EP 01 10 2758

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

                                                                        29-05-2001

| Im Recherchenbericht angeführtes Patentdokument | Datum der Veröffentlichung | Mitglied(er) der Patentfamilie | Datum der Veröffentlichung |
|---|---|---|---|
| EP 0904853 A | 31-03-1999 | DE 19743014 A<br>JP 11189664 A | 01-04-1999<br>13-07-1999 |
| US 5670260 A | 23-09-1997 | AU 5552296 A<br>WO 9633247 A<br>ZA 9504528 A | 07-11-1996<br>24-10-1996<br>09-04-1996 |
| US 4677014 A | 30-06-1987 | DE 3445870 A<br>EP 0185152 A<br>JP 61145346 A | 26-06-1986<br>25-06-1986<br>03-07-1986 |

EPO FORM P0461

Für nähere Einzelheiten zu diesem Anhang : siehe Amtsblatt des Europäischen Patentamts, Nr.12/82